# EUROPEAN PATENT APPLICATION

(11) **EP 4 283 723 A1**
(43) Date of publication of application: **29.11.2023**
(21) Application number: 22806298.0
(22) Date of filing: 23.03.2022
(51) Int. Cl.: H01M 4/62, H01M 4/505, H01M 4/525, H01M 10/0525

(54) **COATED TERNARY ANODE MATERIAL, PREPARATION METHOD THEREFOR, AND LITHIUM ION BATTERY**

(30) Priority: 12.05.2021 CN 202110514188
(71) Applicant: SVOLT ENERGY TECHNOLOGY CO., LTD, Changzhou, Jiangsu 213200 (CN)
(72) Inventor: WAN, Jiangtao, hangzhou, Jiangsu 213200 (CN); ZHANG, Ning, hangzhou, Jiangsu 213200 (CN); ZHANG, Yongjie, hangzhou, Jiangsu 213200 (CN); LIU, Manku, hangzhou, Jiangsu 213200 (CN); LI, Zitan, hangzhou, Jiangsu 213200 (CN)
(74) Representative: Cabinet Beaumont
(86) International application number: PCT/CN2022/082374
(87) International publication number: WO 2022/237328

(57) **Abstract**

The present disclosure provides a coated ternary anode material, a preparation method therefor, and a lithium ion battery. The coated ternary anode material comprises an aluminum, zirconium, and fluorine co-doped ternary anode active material core and a coating layer coated on the surface of the core, the coating layer comprising zirconium hydrogen phosphate and a boron compound. The coated ternary anode material effectively solves the gas production problem and improves the safety performance. At the same time, the material has high discharge capacity, a high first effect, good cycle stability, and a good safety performance.

## Description

### TECHNICAL FIELD

The present disclosure relates to the technical field of new energy, and relates to a coated ternary positive electrode material, a preparation method therefor and a lithium ion battery.

### BACKGROUND

High nickel ternary positive electrode materials have been paid attention by the new energy industry in recent years due to their high specific capacity and low cost of raw materials. Although it has been found that the material generally has some defects, there are still many companies that promote high nickel ternary batteries at present. One of the more serious key problems is that more gas is produced after the battery is made, which affects the safety and cycle life of the battery. One of the main reasons for gas production is that the high-nickel positive electrode material has strong reactivity. The high-nickel positive electrode material releases oxygen in the process of charging and discharging and directly contacts with electrolyte, which makes it unstable in the process of charging and produces gas through chemical reactions. With the increase of cycle times, cracks are appeared and gas production begins to increase significantly.

In order to improve the problem of gas production in batteries, many researches are devoted to doping and coating positive electrode materials. The doping improves the safety and stability of the material, as well as the coating stable coating layer reduces the contact reaction between the material and the electrolyte, and the metal dissolution effect, thus reducing the gas production problem of the battery. In recent years, various research results on coating have provided many valuable coating methods for this field, and more doping coating methods have appeared. The existing high-nickel materials are generally doped with zirconium, titanium, aluminum, tungsten, magnesium, scandium, vanadium, calcium, strontium, barium, gallium and indium, which improves the structural stability and conductivity of the materials to a certain extent, and at the same time, most of the materials are isolated from the electrolyte by coating the oxides of the above metals, which greatly reduce the gas production. However, the existing coating methods also have some shortcomings, and the problem of high nickel material producing more gas still exists.

### SUMMARY

The present disclosure provides a coated ternary positive electrode material in an embodiment. The coated ternary positive electrode material includes a ternary positive active material core co-doped with aluminum, zirconium and fluorine, and a coating layer coated on a surface of the core, wherein the coating layer includes zirconium hydrogen phosphate and a boron compound.

The present disclosure provides a coated ternary positive electrode material in an embodiment. The coated ternary positive electrode material is co-doped with aluminum, zirconium and fluorine, and synergistically coated with zirconium hydrogen phosphate and boron compounds, which can effectively solve the gas production problem of the positive electrode material and improve the safety performance; at the same time, it can ensure the good conductivity and structural stability of the material, ensure the normal release of electrochemical performance; and the coated ternary positive electrode material has high discharge capacity, high initial efficiency, good cycle stability and safety performance. The technical principles are as follows. Firstly, zirconium and aluminum are doped into the crystal lattice, and fluorine ions are introduced to replace oxygen site for doping, which can improve the stability of ternary positive electrode materials (such as high nickel ternary positive electrode materials), thus reducing gas production. Secondly, the synergistic effect of zirconium hydrogen phosphate and boron compounds of coating not only ensures the stabilization effect of the coating layer, but also improves the conductivity of the coating layer through zirconium hydrogen phosphate to avoid the decline of the electrochemical performance of the material due to the deterioration of conductivity of the material caused by the introduction of boron. Thirdly, due to a tiny volume change of zirconium hydrogen phosphate and high stability of phosphate radical, the introduction of the coating layer can reduce degree of breaking the coating layer after multiple cycles and the reaction between the coating layer and the electrolyte, and meanwhile, it also plays an improvement role in reducing gas production.

In an embodiment, the boron compound is converted from a raw material boron source by sintering, and the boron source includes at least one of boric acid and boron oxide. The boron source may be, for example, a single kind of boric acid, or a single kind of boron oxide, or a mixture of boric acid and boron oxide.

In an embodiment, a mixture of boric acid and boron oxide is used as the boron source.

In an embodiment provided by the present disclosure, a boron source is converted into a boron compound by sintering, and the boron compound is matched with zirconium hydrogen phosphate, so that the good coating stability and uniformity of the coating layer can be ensured, and at the same time, the good conductivity is obtained, and the good electrochemical performance of the positive electrode material can be ensured.

In an embodiment, based on a total mass of the core, doped elements aluminum, zirconium and fluorine have a total mass concentration of 500-5000 ppm, such as 500 ppm, 600 ppm, 650 ppm, 700 ppm, 800 ppm, 900 ppm, 1000 ppm, 1250 ppm, 1500 ppm, 1600 ppm, 1800 ppm, 2000 ppm, 2300 ppm, 2600 ppm, 2800 ppm, 3000 ppm, 3500 ppm, 3700 ppm, 4000 ppm, 4200 ppm, 4500 ppm or 5000 ppm, etc.; the coating layer has a mass concentration of 500 -5000 ppm, such as 500 ppm, 600 ppm, 650 ppm, 700 ppm, 800 ppm, 900 ppm, 1000 ppm, 1250 ppm, 1500 ppm, 1600 ppm, 1800 ppm, 2000 ppm, 2300 ppm, 2600 ppm, 2800 ppm, 3000 ppm, 3500 ppm, 3700 ppm, 4000 ppm, 4200 ppm, 4500 ppm or 5000 ppm, etc. The zirconium hydrogen phosphate has a mass ratio of 30-85% in the coating layer, such as 30%, 32.5%, 35%, 40%, 45%, 50%, 52%, 55%, 58%, 60%, 62%, 65%, 70%, 72.5%, 75%, 80% or 85%, etc.

In an embodiment, the present disclosure provides a method of preparing the coated ternary positive electrode material as described above, which comprises the following steps:
(1) mixing a dopant, a precursor of a ternary positive electrode material and a lithium source, and performing a primary sintering in an oxygen-containing atmosphere to obtain a ternary positive electrode active material core co-doped with aluminum, zirconium and fluorine,
   wherein the dopant comprises elements of aluminum, zirconium and fluorine;
(2) mixing the core and an additive, and performing a secondary sintering to obtain the coated ternary positive electrode material;
wherein the additive comprises zirconium hydrogen phosphate and a boron source.

In an embodiment provided by the present disclosure, in step (1), oxygen in the oxygen-containing atmosphere has a volume content of more than 80%, such as 82%, 85%, 90%, 95%, 98%, 99% or 100%, etc.

In an embodiment provided by the present disclosure, the final coating effect can be controlled by adjusting a dosage of the additive.

In an embodiment provided by the present disclosure, a dopant containing aluminum, zirconium and fluorine (for example, a mixture of aluminum fluoride and zirconium fluoride) is used for doping in the lithium insertion process. In the doping process, not only zirconium and aluminum are doped into the crystal lattice, but also fluorine ions are introduced to replace oxygen site for doping, which can further improve the stability of ternary materials (such as, high-nickel ternary materials), thus further reducing the gas production. The coating process is coordinated by introducing zirconium hydrogen phosphate and boron source, which not only ensures the stable effect of the coating layer, but also improves the conductivity of the coating layer through zirconium hydrogen phosphate to avoid the decline of the electrochemical performance of the material due to the deterioration of conductivity of the material caused by the introduction of boron. At the same time, due to a tiny volume change of zirconium hydrogen phosphate and high stability of phosphate radical, the coating can reduce degree of breaking the coating layer after multiple cycles and the reaction between the coating layer and the electrolyte. Through the doping and the coating, the gas production problem of the material has been further improved.

In the present disclosure, the positive electrode material prepared by the method provided in an embodiment has good doping and coating effect, which can realize uniform doping and coating, effectively solving the gas production problem of the positive electrode material and improving safety performance; at the same time, it can ensure good conductivity and structural stability of the material, ensure normal release of electrochemical performance, and has no abnormality in electrical performance detection.

In the present disclosure, the method provided in an embodiment has advantages of realizability, good uniformity, simple operation and good coating effect after fired, and can effectively reduce gas production.

A specific type and a preparation method of the precursor of the ternary positive electrode material are not limited in the present disclosure.

The precursor of the ternary positive electrode material may be, for example, NiₓCo_{y}Mn_{z}(OH)₂, wherein 0.8 ≤ x < 1, 0 < y < 0.2, 0 < z < 0.2, x + y + z = 1.

The preparation method of the precursor of the ternary positive electrode material can refer to the preparation method disclosed in the related art, for example, the following solution can be carried out:
(I) preparing a mixed solution of soluble nickel salt, soluble cobalt salt and soluble manganese salt with a concentration of 0.5-1.0 mol/L, wherein the concentration is a total metal cation concentration in the mixed solution;
   preparing a sodium hydroxide solution with a concentration of 5-10 mol/L;
   preparing an ammonia solution with a concentration of 8-12 mol/L;
   the above solutions are prepared in no sequence;
(II) adding the sodium hydroxide solution and the ammonia solution into the mixed solution of soluble nickel salt, soluble cobalt salt and soluble manganese salt synchronously, reacting to synthesize a precursor of nickel, cobalt and manganese ternary positive electrode material, following the synthesis, washing, dehydrating and drying to obtain a product of the precursor of ternary positive electrode material.

In an embodiment, the dopant in step (1) is a mixture of aluminum fluoride and zirconium fluoride, aluminum fluoride and zirconium fluoride have a mass ratio of 1:(0.5-5), such as 1:0.5, 1:1, 1:1.2, 1:1.5, 1:2, 1:2.5, 1:3, 1:3.5, 1:4, 1:4.5 or 1:5, etc. The primary sintering in step (1) is performed at 750-980°C, such as 750°C, 775°C, 800°C, 820°C, 840°C, 850°C, 880°C, 900°C, 925°C, 950°C or 980°C, etc., and the primary sintering is performed for 10-20 h, such as 10 h, 12 h, 13 h, 15 h, 16 h, 18 h, 19 h or 20 h, etc.

In an embodiment, the lithium source is used in an appropriate excess.

In an embodiment, the lithium source and the precursor of the ternary positive electrode material have a molar ratio of 1.02-1.06, such as 1.02, 1.03, 1.04, 1.05 or 1.06, etc.

In an embodiment, the boron source in step (2) is boric acid; and a material obtained after the mixing in step (2) is mixed by wet method, and the mixing is performed for 15-45 min; zirconium hydrogen phosphate is added in an amount of 0.05-0.5% of a mass of the core, boric acid is added in an amount of 0.05-0.3% of the mass of the core.

In an embodiment, in step (2), the boron source is a mixture of boric acid and boron oxide in any ratio.

By using the mixture of boric acid and boron oxide as a boron source, the temperature of the secondary sintering can be adjusted to improve the temperature of the coating neither too high, resulting in energy waste and lithium precipitation reaction; nor does the use of pure boric acid cause the material surface to be overly corroded and form defects.

In an embodiment, in step (2), a material obtained after the mixing has a moisture content of less than 0.05wt%, such as 0.04wt%, 0.03wt% or 0.02wt%, etc.

In an embodiment, drying is carried out simultaneously during the mixing in step (2), for example, a primary drying is performed at 150-200°C (such as 150°C, 155°C, 165°C, 180°C, 190°C or 200°C, etc.) for 2-6 h (such as 2 h, 2.5 h, 3 h, 3.5 h, 4 h, 4.5 h, 5 h, or 6 h, etc.) in a coulter dryer, so that the additive and the positive material are fully mixed and simultaneously dried and dehydrated to a predetermined moisture content.

In an embodiment, in step (2), the secondary sintering is performed in an oxygen-containing atmosphere, the secondary sintering is performed at 300-700°C, such as 300°C, 400°C, 450°C, 500°C, 550°C, 600°C, 650°C or 700°C, etc., and the secondary sintering is performed for 2-15 h, such as 2 h, 3 h, 4 h, 5 h, 6 h, 7 h, 8 h, 10 h, 12 h or 15 h, etc. A volume content of oxygen in the oxygen-containing atmosphere is more than 80%, such as 82%, 85%, 90%, 95%, 98%, 99% or 100%, etc.

In an embodiment, the method further comprises a step of washing and dehydrating after step (1) and before step (2), wherein the washing and dehydrating includes: mixing the ternary positive electrode active material core co-doped with aluminum, zirconium and fluorine with water in a liquid-solid ratio of 1:1 to 5:1, (such as 1: 1, 2:1, 3:1, 3.5:1, 4: 1 or 5: 1, etc.), stirring and washing for 2--30 min (such as 2 min, 5 min, 10 min, 15 min, 20 min, 25 min or 30 min, etc.), then introducing nitrogen to dehydrate until a moisture content of less than 5wt%, such as 4.5wt%, 4wt%, 3wt%, 2.5wt%, 2wt%, 1wt% or 0.5wt%, etc.

In an embodiment, nitrogen is introduced to dehydrate until a moisture content of 1-5 wt%.

Residual alkali can be removed by carrying out the washing and dehydrating step after the doping.

In an embodiment, the method includes the following steps:
① precursor synthesizing: according to the molar ratio of nickel element, cobalt element and manganese element, soluble nickel salt, soluble cobalt salt and soluble manganese salt are weighed and prepared into a mixed solution of soluble nickel salt, cobalt salt and manganese salt; wherein nickel in the precursor has a molar content of more than or equal to 80%;
   an alkali solution with a concentration of 5-10 mol/L is prepared, wherein the alkali solution includes sodium hydroxide solution and/or potassium hydroxide solution;
   an ammonia solution with a concentration of 8-12 mol/L is prepared;
   the above solutions are prepared in no sequence;
   the alkali solution and the ammonia solution are added into the mixed solution of soluble nickel salt, soluble cobalt salt and manganese salt synchronously, then a ternary precursor is synthesized by reaction, and after synthesis, the ternary precursor is washed, dehydrated and dried to obtain a precursor product.
② primary sintering of the positive electrode: the precursor product, a lithium source and a dopant (specifically, a mixture of aluminum fluoride and zirconium fluoride) are weighed in a certain amount, mixed by a high speed mixer, fully mixed and calcined at 750°C for 15 h in an oxygen atmosphere to obtain a primary sintered material;
③ washing and dehydrating: the primary sintered material is placed in a three-in-one washing machine, a proper amount of pure water is added with a liquid-solid ratio of 1:1 to 5:1, stirred and washed for 2-30 min, then nitrogen is introduce for rapid dehydration, and a moisture content is confirmed to be less than 5% after dehydration;
④ additive introducing: zirconium hydrogen phosphate and boron source are added, and zirconium hydrogen phosphate and boron source are added in an amount of 0.05-0.5% and 0.05-0.3% of the primary sintered material after washing and dehydrating, respectively, and wet premixing is carried out for 15-45 min;
⑤ secondary mixing: primary drying is performed in a coulter dryer at 200°C for 4 h, so that the additive and the positive electrode material are fully mixed, dried and dehydrated, and a moisture content after drying is less than 0.05%; and
⑥ secondary sintering: a primary dried sample is weighed in a certain amount and calcined at 400°C for 8 h in an oxygen atmosphere to obtain a secondary sintered material, that is, the coated ternary positive electrode material, in particular to a spherical ternary doped coated positive electrode material with high nickel.

In an embodiment, the present disclosure provides a lithium ion battery, and the lithium ion battery includes the coated ternary positive electrode material as above.

### DETAILED DESCRIPTION

The technical solution of the present disclosure will be further described below through specific embodiments. It should be apparent to those skilled in the art that the examples are only used for a better understanding of the present disclosure and should not be construed as a specific limitation of the present disclosure.

### Example 1

This example provides a coated ternary positive electrode material, which includes a ternary positive active material core co-doped with aluminum, zirconium and fluorine, and a coating layer coated on a surface of the core, wherein the coating layer includes zirconium hydrogen phosphate and a boron compound, and the boron compound are boron oxide and lithium borate;
wherein, based on a total mass of the core, aluminum, zirconium and fluorine have a total mass concentration of 3000 ppm, the coating layer has a mass concentration of 3500 ppm, and zirconium hydrogen phosphate has a mass ratio of is 57% in the coating layer.

The preparation method of the coated ternary positive electrode material includes the following steps.
① Precursor synthesizing: soluble nickel salt, soluble cobalt salt and soluble manganese salt were weighed in a molar ratio of 8:1:1 to prepare a ternary mixed solution A of nickel, cobalt and manganese (a total metal cation concentration in the mixed solution A was 0.6 mol/L), then 6 mol/L of a sodium hydroxide solution B and 9 mol/L of an ammonia solution C were prepared, and the sodium hydroxide solution B and the ammonia solution C were added into the ternary mixed solution A of nickel, cobalt and manganese synchronously, then a ternary 811 precursor was synthesized by reaction, and after synthesis, the ternary 811 precursor was washed, dehydrated and dried to obtain a precursor product D with a particle size D50 of 10 µm.
② Primary sintering of the positive electrode: the precursor product D, a lithium hydroxide E, and additives of aluminum fluoride F and zirconium fluoride G were weighed in a certain amount, mixed by a high speed mixer, wherein the precursor product D and lithium hydroxide had a molar ratio of 1:1.05, aluminum fluoride was added in an amount of 0.1wt% of the precursor product D, and zirconium fluoride was added in an amount of 0.2wt% of the precursor product D, fully mixed, and calcined at 750°C for 15 h in an oxygen atmosphere to obtain a primary sintered material H.
③ Washing and dehydrating: the primary sintered material H was placed in a three-in-one washing machine, a proper amount of pure water was added with a liquid-solid ratio of 2:1, stirred and washed for 10 min, then nitrogen was introduced for rapid dehydration, and a moisture content was confirmed to be less than 5% after dehydration.
④ Additive introducing: zirconium hydrogen phosphate and boric acid was added, and wet premixing was carried out for 30 min, wherein zirconium hydrogen phosphate was added was added in an amount of 0.2wt% of the primary sintered material H after washing and dehydrating, and boric acid was added was added in an amount of 0.15wt% of the primary sintered material H after washing and dehydrating.
⑤ Secondary mixing: primary drying was performed in a coulter dryer at 200°C for 4 h, so that the additive and the positive electrode material were fully mixed, dried and dehydrated, and a moisture content after drying was less than 0.05wt%.
⑥ Secondary sintering: a primary dried sample is weighed in a certain amount and calcined at 400°C for 8 h in an oxygen atmosphere to obtain a secondary sintered material I, that was, the coated ternary positive electrode material.

### Example 2

This example provides a coated ternary positive electrode material, which includes a ternary positive active material core co-doped with aluminum, zirconium and fluorine, and a coating layer coated on a surface of the core, wherein the coating layer includes zirconium hydrogen phosphate and a boron compound, and the boron compound are boron oxide and lithium borate;
wherein, based on a total mass of the core, aluminum, zirconium and fluorine have a total mass concentration of 5000 ppm, the coating layer has a mass concentration of 4000 ppm, and zirconium hydrogen phosphate has a mass ratio of is 75% in the coating layer.

The preparation method of the coated ternary positive electrode material includes the following steps.
① Precursor synthesizing: soluble nickel salt, soluble cobalt salt and soluble manganese salt were weighed in a molar ratio of 83:11:6 to prepare a ternary mixed solution A of nickel, cobalt and manganese (a total metal cation concentration in the mixed solution A was 0.5 mol/L), then 8 mol/L of a sodium hydroxide solution B and 10 mol/L of an ammonia solution C were prepared, and the sodium hydroxide solution B and the ammonia solution C were added into the ternary mixed solution A of nickel, cobalt and manganese synchronously, then a ternary 831106 precursor was synthesized by reaction, and after synthesis, the ternary 831106 precursor was washed, dehydrated and dried to obtain a precursor product D with a particle size D50 of 9 µm.
② Primary sintering of the positive electrode: the precursor product D, a lithium hydroxide E, and additives of aluminum fluoride F and zirconium fluoride G were weighed in a certain amount, mixed by a high speed mixer, wherein the precursor product D and lithium hydroxide had a molar ratio of 1:1.05, aluminum fluoride was added in an amount of 0.2wt% of the precursor product D, and zirconium fluoride was added in an amount of 0.3wt% of the precursor product D, fully mixed, and calcined at 780°C for 10 h in an oxygen atmosphere to obtain a primary sintered material H.
③ Washing and dehydrating: the primary sintered material H was placed in a three-in-one washing machine, a proper amount of pure water was added with a liquid-solid ratio of 2:1, stirred and washed for 10 min, then nitrogen was introduced for rapid dehydration, and a moisture content was confirmed to be less than 5% after dehydration.
④ Additive introducing: zirconium hydrogen phosphate and boric acid was added, and wet premixing was carried out for 30 min, wherein zirconium hydrogen phosphate was added was added in an amount of 0.3wt% of the primary sintered material H after washing and dehydrating, and boric acid was added was added in an amount of 0.1wt% of the primary sintered material H after washing and dehydrating.
⑤ Secondary mixing: primary drying was performed in a coulter dryer at 170°C for 4 h, so that the additive and the positive electrode material were fully mixed, dried and dehydrated, and a moisture content after drying was less than 0.05wt%.
⑥ Secondary sintering: a primary dried sample is weighed in a certain amount and calcined at 500°C for 7 h in an oxygen atmosphere to obtain a secondary sintered material I, that was, the coated ternary positive electrode material.

### Example 3

This example provides a coated ternary positive electrode material, which includes a ternary positive active material core co-doped with aluminum, zirconium and fluorine, and a coating layer coated on a surface of the core, wherein the coating layer includes zirconium hydrogen phosphate and a boron compound, and the boron compound are boron oxide and lithium borate;
wherein, based on a total mass of the core, aluminum, zirconium and fluorine have a total mass concentration of 4000 ppm, the coating layer has a mass concentration of 2700 ppm, and zirconium hydrogen phosphate has a mass ratio of is 74% in the coating layer.

The preparation method of the coated ternary positive electrode material includes the following steps.
① Precursor synthesizing: soluble nickel salt, soluble cobalt salt and soluble manganese salt were weighed in a molar ratio of 88:9:3 to prepare a ternary mixed solution A of nickel, cobalt and manganese (a total metal cation concentration in the mixed solution A was 0.8 mol/L), then 4 mol/L of a sodium hydroxide solution B and 6 mol/L of an ammonia solution C were prepared, and the sodium hydroxide solution B and the ammonia solution C were added into the ternary mixed solution A of nickel, cobalt and manganese synchronously, then a ternary 880903 precursor was synthesized by reaction, and after synthesis, the ternary 831106 precursor was washed, dehydrated and dried to obtain a precursor product D with a particle size D50 of 9.5 µm.
② Primary sintering of the positive electrode: the precursor product D, a lithium hydroxide E, and additives of aluminum fluoride F and zirconium fluoride G were weighed in a certain amount, mixed by a high speed mixer, wherein the precursor product D and lithium hydroxide had a molar ratio of 1:1.04, aluminum fluoride was added in an amount of 0.1wt% of the precursor product D, and zirconium fluoride was added in an amount of 0.3wt% of the precursor product D, fully mixed, and calcined at 730°C for 18 h in an oxygen atmosphere to obtain a primary sintered material H.
③ Washing and dehydrating: the primary sintered material H was placed in a three-in-one washing machine, a proper amount of pure water was added with a liquid-solid ratio of 2:1, stirred and washed for 10 min, then nitrogen was introduced for rapid dehydration, and a moisture content was confirmed to be less than 5% after dehydration.
④ Additive introducing: zirconium hydrogen phosphate and boric acid was added, and wet premixing was carried out for 30 min, wherein zirconium hydrogen phosphate was added was added in an amount of 0.2wt% of the primary sintered material H after washing and dehydrating, and boric acid was added was added in an amount of 0.07wt% of the primary sintered material H after washing and dehydrating.
⑤ Secondary mixing: primary drying was performed in a coulter dryer at 180°C for 4 h, so that the additive and the positive electrode material were fully mixed, dried and dehydrated, and a moisture content after drying was less than 0.05wt%.
⑥ Secondary sintering: a primary dried sample is weighed in a certain amount and calcined at 350°C for 6 h in an oxygen atmosphere to obtain a secondary sintered material I, that was, the coated ternary positive electrode material.

### Example 4

The difference from Example 1 is that, in step ②, aluminum fluoride was added in an amount of 0.2wt% of the precursor product D, and zirconium fluoride was added in an amount of 0.1wt% of the precursor product D.

### Example 5

The difference from Example 1 is that, in step ④, the boric acid was replaced by a mixture of boric acid and boron oxide with the same amount, and boric acid and boron oxide had a mass ratio of 1:1. The secondary sintering was performed at 380°C.

### Example 6

The difference from Example 1 is that an amount of adding zirconium hydrogen phosphate in step 40 was changed so that a mass ratio of zirconium hydrogen phosphate in the coating layer was 90%.

### Comparative Example 1

The difference from Example 1 is that zirconium hydrogen phosphate was not added in step ④.

### Comparative Example 2

The difference from Example 1 is that boric acid was not added in step 40.

### Comparative Example 3

The difference from Example 1 is that aluminum fluoride and zirconium fluoride were not added in step ②.

### Test Section

The positive electrode materials prepared in each example and comparative example were used to prepare the positive electrode sheets and assembled into all-electric pouch cell for electrochemical performance test, wherein the negative electrode active material was graphite. The results are shown in Table 1. Specifically:
Discharge capacity test: at 25°C, the charge rate was 0.33 C and the discharge rate was 0.33 C.

Gas production test: at 45°C, the charge rate was 0.5 C, and the discharge rate was 1 C, and after 600 cycles, the gas production was tested by the test method of cell volume change after gas production.

**Table 1**

| | Discharge Capacity (mAh/g) | Initial efficiency (%) | Gas Production (mL/Ah) |
|---|---|---|---|
| Example 1 | 201 | 89 | 0.6 |
| Example 2 | 204 | 89 | 0.7 |
| Example3 | 207 | 90 | 1.1 |
| Example 4 | 199.5 | 88 | 0.58 |
| Example 5 | 202 | 89 | 0.55 |
| Example 6 | 202 | 89.3 | 1.2 |
| Comparative Example 1 | 199 | 88 | 0.8 |
| Comparative Example 2 | 202.5 | 89.2 | 1.6 |
| Comparative Example 3 | 201 | 89 | 1.25 |

The comparison between Example 1 and Example 4 shows that dopants aluminum fluoride and zirconium fluoride have good electrochemical performance in the mass ratio range of 1 :(0.5-5).

The comparison between Example 1 and Example 5 shows that by selecting the mixture of boric acid and boron oxide as a boron source, the secondary sintering temperature can be adjusted, and better electrochemical performance can be obtained at a lower secondary sintering temperature.

The comparison of Example 1 with Example 6 and Comparative Example 2shows that the high content of zirconium hydrogen phosphate and the low content of the boron compound will lead to a poor coating effect, which will not effectively play a role in enhancing the conductivity and stability, and the gas production will become large.

The comparison between Example 1 and Comparative Example 1 shows that if the coating layer does not contain zirconium hydrogen phosphate, the conductivity and coating stability of the positive electrode material will be affected, resulting in a decrease in the initial efficiency of capacity and an increase in gas production.

## Claims

1. A coated ternary positive electrode material, which comprises a ternary positive active material core co-doped with aluminum, zirconium and fluorine, and a coating layer coated on a surface of the core, wherein the coating layer comprises zirconium hydrogen phosphate and a boron compound.

2. The coated ternary positive electrode material according to claim 1, wherein the boron compound is converted from a raw material boron source by sintering, and the boron source comprises at least one of boric acid and boron oxide.

3. The coated ternary positive electrode material according to claim 1, wherein, based on a total mass of the core, doped elements aluminum, zirconium and fluorine have a total mass concentration of 500-5000 ppm and the coating layer has a mass concentration of 500-5000 ppm;
wherein, zirconium hydrogen phosphate has a mass ratio of 30-85% in the coating layer.

4. A method of preparing the coated ternary positive electrode material according to any one of claims 1 to 3, comprising the following steps:
(1) mixing a dopant, a precursor of a ternary positive electrode material and a lithium source, and performing a primary sintering in an oxygen-containing atmosphere to obtain a ternary positive electrode active material core co-doped with aluminum, zirconium and fluorine,
wherein, the dopant comprises elements of aluminum, zirconium and fluorine;
(2) mixing the core and an additive, and performing a secondary sintering to obtain the coated ternary positive electrode material;
wherein, the additive comprises zirconium hydrogen phosphate and a boron source.

5. The method according to claim 4, wherein in step (1), the dopant is a mixture of aluminum fluoride and zirconium fluoride, the aluminum fluoride and zirconium fluoride have a mass ratio of 1:(0.5-5), and the primary sintering is performed at 750-980°C, and the primary sintering is performed for 10-20 h.

6. The method according to claim 4, wherein in step (2), the boron source is a mixture of boric acid and boron oxide in any ratio.

7. The method according to claim 4, wherein in step (2), a material obtained after the mixing has a moisture content of less than 0.05wt%.

8. The method according to claim 4, wherein in step (2), the secondary sintering is performed in an oxygen-containing atmosphere, the secondary sintering is performed at 300-700°C, and the secondary sintering is performed for 2-15 h.

9. The method according to claim 4, wherein the method further comprises a step of washing and dehydrating after step (1) and before step (2), wherein the washing and dehydrating comprises: mixing the ternary positive electrode active material core co-doped with aluminum, zirconium and fluorine with water in a liquid-solid ratio of 1:1 to 5:1, stirring and washing for 2-30 min, and then introducing nitrogen to dehydrate until a moisture content of less than 5wt%.

10. A lithium ion battery comprising the coated ternary positive electrode material according to any one of claims 1 to 3.
